# FASCICULE DE BREVET EUROPEEN

(11) **EP 2 004 977 B1**
(45) Date de publication et mention de la délivrance du brevet: **19.01.2011**
(21) Numéro de dépôt: 07728103.8
(22) Date de dépôt: 13.04.2007
(51) Int. Cl.: F02G 1/04

(54) **CONVERTISSEUR THERMO-ACOUSTIQUE ET GÉNÉRATEUR D'ÉNERGIE ÉLECTRIQUE COMPRENANT UN CONVERTISSEUR THERMO-ACOUSTIQUE.**
THERMO-AKUSTISCHER WANDLER UND EINEN THERMO-AKUSTISCHEN WANDLER UMFASSENDER GENERATOR ZUR ERZEUGUNG ELEKTRISCHER ENERGIE
THERMO-ACOUSTIC CONVERTER AND ELECTRICAL ENERGY GENERATOR COMPRISING A THERMO-ACOUSTIC CONVERTER.

(30) Priorité: 13.04.2006 FR 0651347
(43) Date de publication de la demande: 24.12.2008
(73) Titulaire: Société Technique pour l'Energie Atomique TECHNICATOME, 91190 (US)
(72) Inventeur: CHAIX, Jean-Edmond, F-04860 Pierrevert (FR)
(74) Mandataire: Poulin, Gérard
(86) Numéro de dépôt international: PCT/EP2007/053638
(87) Numéro de publication internationale: WO 2007/118861

(56) Documents cités:
- EP-A1- 1 367 561
- DE-A1- 19 960 966
- JP-A- 1 087 861
- US-A- 5 923 104
- US-A1- 2003 188 541

## Description

### Domaine technique et art antérieur

L'invention concerne un convertisseur thermo-acoustique. L'invention concerne également un générateur d'énergie électrique qui comprend un convertisseur thermo-acoustique selon l'invention ainsi qu'une centrale électrique qui comprend un générateur d'énergie électrique selon l'invention.

De façon générale, un générateur d'énergie électrique selon l'invention peut être utilisé dans de nombreuses applications (moteurs de voitures, générateurs d'électricité embarqués, centrales électriques, etc.).

La centrale électrique de l'invention est destinée à équiper, par exemple, des sites isolés et/ou des zones désertiques.

Les dispositifs de conversion thermo-acoustique qui génèrent des ondes acoustiques, couplés à des étages qui convertissent l'énergie mécanique des ondes acoustiques en énergie électrique font actuellement l'objet de travaux dans un certain nombre de laboratoires de recherche. Les dispositifs connus à ce jour utilisent, outre le phénomène connu de la conversion thermo-acoustique, des convertisseurs qui intègrent des pièces en mouvement ou des membranes métalliques vibrantes, voire une association des deux. Une utilisation répétée de telles structures conduit à une réduction très importante de leur fiabilité et complique très fortement leur maintenance industrielle.

Le convertisseur thermo-acoustique de l'invention et le générateur d'énergie électrique de l'invention ne présentent pas ces inconvénients. Un dispositif sans pièces en mouvement est connu de US 2003/188541.

### Exposé de l'invention

En effet, l'invention concerne un convertisseur thermo-acoustique comprenant une source chaude, une source froide, un bloc d'éléments thermiquement conducteurs espacés les uns des autres et fixés les uns aux autres, le bloc étant situé entre la source chaude et la source froide de façon que s'établisse un gradient de température entre des premières extrémités des éléments thermiquement conducteurs et des deuxièmes extrémités des éléments thermiquement conducteurs situées à l'opposé des premières extrémités, et un fluide thermodynamique qui emplit l'espace entre les éléments thermiquement conducteurs et un espace environnant les éléments thermiquement conducteurs de sorte que des ondes acoustiques s'établissent, dans le fluide thermodynamique qui emplit l'espace environnant les éléments thermiquement conducteurs, sous l'effet du gradient de température, caractérisé en ce que la source chaude comprend une pièce métallique monobloc constituée d'une paroi cylindrique dans laquelle sont forés des caloducs et d'une paroi transversale qui sépare la paroi cylindrique en une première partie de paroi cylindrique et une deuxième partie de paroi cylindrique, la paroi transversale, la première partie de paroi cylindrique et une paroi supplémentaire située en regard de la paroi transversale par rapport à la première partie de paroi cylindrique délimitant un volume qui contient une source de chaleur.

Selon une caractéristique supplémentaire de l'invention, la source chaude comprend un bouclier thermique inséré dans la deuxième partie de paroi cylindrique, au-delà d'une extrémité des caloducs, et qui isole thermiquement la source chaude de la source froide, le bouclier thermique étant constitué d'une paroi ouverte par un trou débouchant dans lequel est placé le bloc d'éléments thermiquement conducteurs, le fluide thermodynamique emplissant l'espace situé entre la paroi transversale, la deuxième partie de paroi cylindrique et la structure constituée du bouclier thermique et du bloc d'éléments thermiquement conducteurs.

Selon une caractéristique supplémentaire de l'invention, le bloc d'éléments thermiquement conducteurs est maintenu par une structure qui enserre le bloc d'éléments thermiquement conducteurs.

Selon une autre caractéristique supplémentaire de l'invention, la structure qui enserre le bloc d'éléments thermiquement conducteurs se prolonge dans la source froide par une paroi qui forme une veine dans laquelle les ondes acoustiques se propagent.

Selon une autre caractéristique supplémentaire de l'invention, la source froide comprend une paroi cylindrique reliée à la paroi cylindrique de la source chaude et séparée de la paroi cylindrique de la source chaude par un revêtement thermiquement isolant.

Selon une autre caractéristique supplémentaire de l'invention, le revêtement thermiquement isolant est un revêtement de céramique.

Selon une autre caractéristique supplémentaire de l'invention, un échangeur évaporateur dans lequel circule un fluide thermodynamique est intégré dans la paroi de la source froide.

Selon une autre caractéristique supplémentaire de l'invention, le fluide thermodynamique qui circule dans l'échangeur évaporateur est de l'alcool ou du méthanol.

Selon une autre caractéristique supplémentaire de l'invention, la source froide comprend un échangeur condenseur refroidi en convection naturelle par l'air ambiant.

Selon un deuxième mode de réalisation de l'invention, la source froide comprend un ensemble de caloducs de refroidissement répartis, sur la face intérieure de la paroi qui délimite la veine, entre une première de leur extrémité et un premier point intermédiaire, des trous étant pratiqués dans la paroi qui délimite la veine et dans la paroi de la source froide pour permettre d'introduire les caloducs de refroidissement du convertisseur thermo-acoustique, les caloducs de refroidissement étant soudés sur un radiateur entre un deuxième point intermédiaire et une deuxième de leur extrémité, opposée à leur première extrémité.

Selon une caractéristique supplémentaire du deuxième mode de réalisation de l'invention, les parties de caloducs de refroidissement qui sont placées à l'intérieur de la veine sont reliées par des ailettes.

Selon une autre caractéristique supplémentaire de l'invention, les caloducs de la source chaude contiennent un fluide thermodynamique.

Selon une autre caractéristique supplémentaire de l'invention, le fluide thermodynamique contenu dans ces caloducs est du sodium à la pression atmosphérique.

Selon une autre caractéristique supplémentaire de l'invention, l'intérieur les caloducs est équipé d'un habillage permettant d'organiser des écoulements entre des zones d'évaporation et des zones de condensation du fluide thermodynamique qu'ils contiennent.

Selon une autre caractéristique supplémentaire de l'invention, le fluide thermodynamique qui emplit l'espace entre les éléments thermiquement conducteurs et un espace environnant les éléments thermiquement conducteurs est un métal alcalin fondu.

Selon une autre caractéristique supplémentaire de l'invention, le métal alcalin fondu est du sodium fondu, de l'eutectique Na-K fondu ou du lithium fondu.

Selon une autre caractéristique supplémentaire de l'invention, un calorifuge entoure la source chaude et la source froide.

Selon une autre caractéristique supplémentaire de l'invention, le bloc d'éléments thermiquement conducteurs est un ensemble de plaques thermiquement conductrices fixées les unes aux autres par soudure.

Selon un autre mode de réalisation de l'invention, le bloc d'éléments thermiquement conducteurs est une bobine faite d'un feuillard plissé et d'un feuillard lisse enroulés l'un dans l'autre.

Selon une autre caractéristique supplémentaire de l'invention, une enceinte de sécurité permet de récupérer une fuite du fluide thermodynamique qui emplit l'espace entre les plaques et l'espace environnant les plaques et de détruire ladite fuite au moyen d'un dispositif de neutralisation pré-installé dans un appendice froid de la dite enceinte.

Selon une autre caractéristique supplémentaire de l'invention, la paroi supplémentaire est un hublot transparent à la lumière, de sorte que la source de chaleur constitue un four solaire dès lors que la lumière du soleil traverse la paroi supplémentaire.

L'invention concerne également un générateur d'énergie électrique comportant un convertisseur thermo-acoustique qui produit des ondes acoustiques à partir d'un gradient de chaleur et un convertisseur magnétohydrodynamique qui produit de l'électricité à partir des ondes acoustiques créées par le convertisseur thermo-acoustique, caractérisé en ce que le convertisseur thermo-acoustique est un convertisseur thermiquement d'énergie thermique en énergie mécanique selon l'invention.

Selon une autre caractéristique de l'invention, le convertisseur magnétohydrodynamique comprend
- une veine dans laquelle oscillent les ondes acoustiques,
- un circuit magnétique capable de faire régner dans la veine un champ magnétique perpendiculaire à la direction d'écoulement des ondes acoustiques,
- deux électrodes situées de part et d'autre de la veine, électriquement isolées de la veine et alignées selon un axe perpendiculaire à la direction d'écoulement des ondes acoustiques et à la direction du champ magnétique, et
- deux câbles collecteurs électriquement isolés de la veine et reliés, respectivement, aux deux électrodes.

Selon une autre caractéristique supplémentaire de l'invention, les électrodes sont des blocs prismatiques de métal amagnétique et sont électriquement isolées de la veine par des dépôts de céramique qui enrobent les électrodes.

Selon un autre mode de réalisation de l'invention, le convertisseur magnéto-hydro-dyriamique comprend :
- une veine dans laquelle oscillent les ondes acoustiques,
- des capteurs à induction et une chaîne de mesure qui déterminent la pulsation et la vitesse de déplacement par rapport au temps des ondes acoustiques,
- un processeur qui génère une information de commande à partir des mesures de pulsation et de vitesse de déplacement,
- un générateur de courant commandé par l'information de commande, et
- un ensemble de bobines situées de part et d'autres de la veine et reliées au générateur de courant.

L'invention concerne également une centrale électrique qui comprend
- un générateur d'électricité selon l'invention, dans le cas où le convertisseur thermo-acoustique est un convertisseur équipé d'un four solaire avec hublot, et
- une parabole de concentration de la lumière solaire, le hublot étant alors positionné sensiblement au niveau de la zone focale de la parabole de concentration.

Selon une caractéristique supplémentaire de l'invention, la centrale électrique comprend un dispositif de stockage d'énergie.

Un générateur d'énergie électrique selon l'invention produit de l'électricité à partir de chaleur de façon uniquement statique, sans pièce en mouvement. Il intègre un certain nombre de composants et de technologie dont l'agencement judicieux permet un fonctionnement fiable et de longue durée.

Un générateur d'énergie électrique conforme à l'invention a, par exemple, une capacité de production d'environ 20KW d'électricité basse tension (220V/50Hz). Dans le cas où le dispositif d'énergie électrique comprend un dispositif d'accumulation d'énergie, il est avantageusement possible de générer de l'énergie en l'absence de rayonnement solaire.

### Brève description des figures

D'autres caractéristiques et avantages de l'invention apparaîtront à la lecture d'un mode de réalisation préférentiel fait en référence aux figures jointes, parmi lesquelles :
- la figure 1 représente une vue en coupe longitudinale d'un générateur d'énergie électrique selon l'invention ;
- la figure 2A représente une vue en coupe longitudinale de la source chaude d'un convertisseur thermo-acoustique selon l'invention;
- les figures 2B et 2C représentent deux vues en coupe transversale de la source chaude représentée en figure 2A ;
- la figure 3 représente une vue 3D en perspective d'une pièce métallique monobloc qui contribue à la réalisation de la source chaude de l'invention ;
- les figures 4A-4C représentent des vues d'une pièce mécanique apte à générer des ondes acoustiques dans un fluide thermodynamique selon un mode de réalisation particulier de l'invention ;
- la figure 5 représente une vue en coupe longitudinale d'un premier mode de réalisation d'une source froide du convertisseur thermo-acoustique selon l'invention ;
- les figures 6A et 6B représentent, respectivement, une vue en coupe longitudinale et une vue en coupe transversale d'une source froide selon un deuxième mode de réalisation de l'invention ;
- les figures 7A et 7B représentent, respectivement, une vue en coupe transversale et une vue en coupe longitudinale d'un convertisseur magnétohydrodynamique selon un premier mode de réalisation de l'invention ;
- les figures 8A-8B représentent un montage de raccords diélectriques étanches pouvant être utilisés dans le cadre de l'invention ;
- la figure 9 représente un convertisseur magnétohydrodynamique selon un deuxième mode de réalisation de l'invention ;
- la figure 10 représente un exemple de centrale électrique qui comprend un générateur d'énergie électrique selon l'invention.

### Description détaillée d'un mode de réalisation préférentiel de l'invention

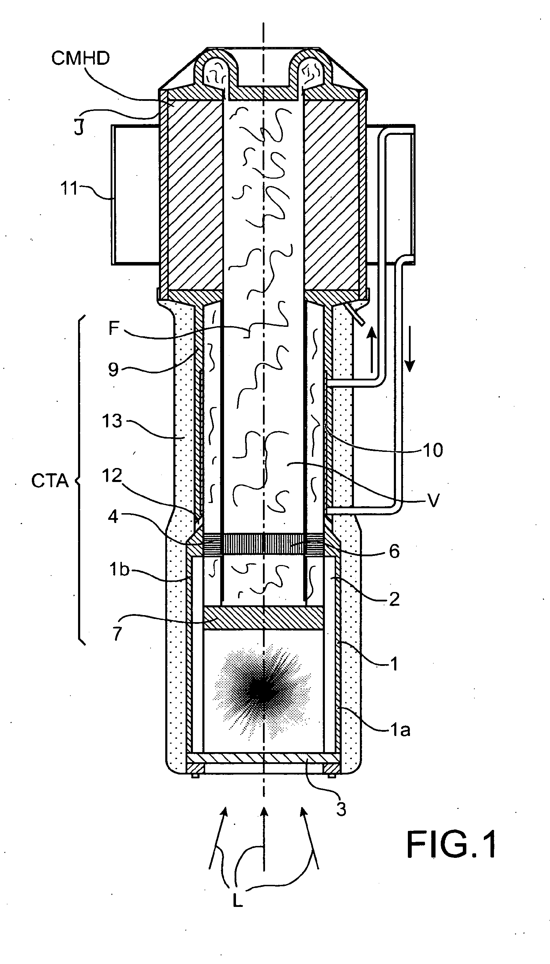

Le générateur d'électricité selon l'invention comprend un convertisseur thermo-acoustique CTA qui produit des ondes acoustiques à partir de chaleur et un convertisseur magnétohydrodynamique CMHD qui produit de l'électricité à partir des ondes acoustiques générées par le convertisseur thermo-acoustique (cf. figure 1).

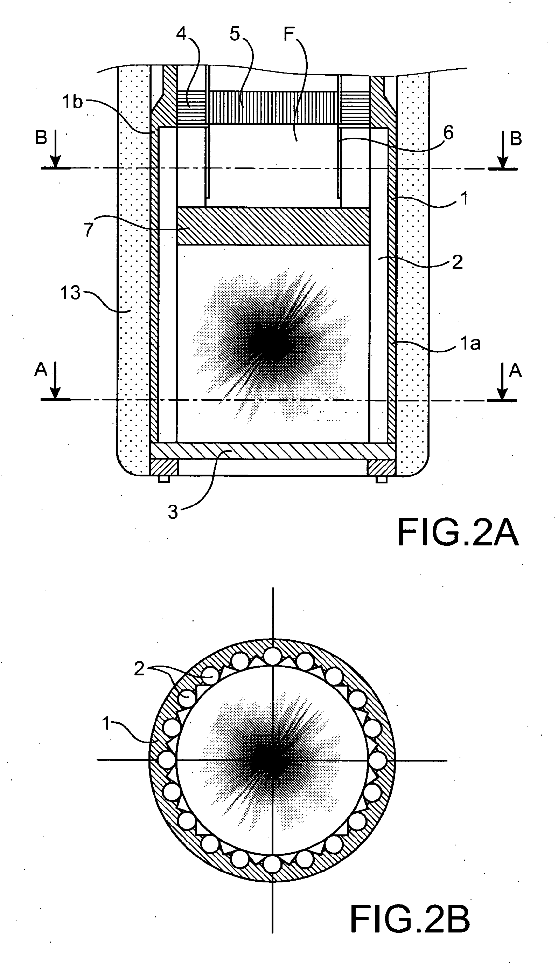

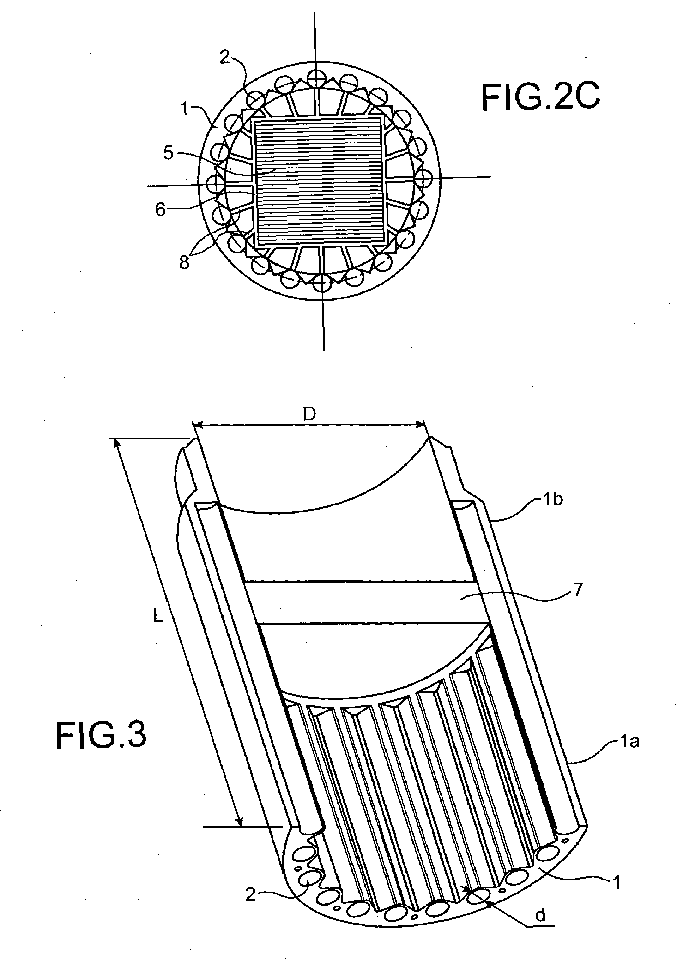

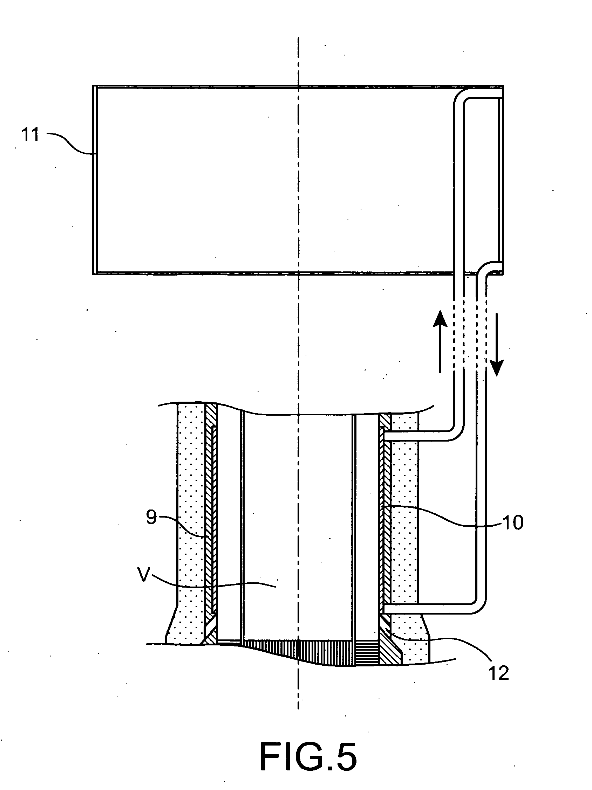

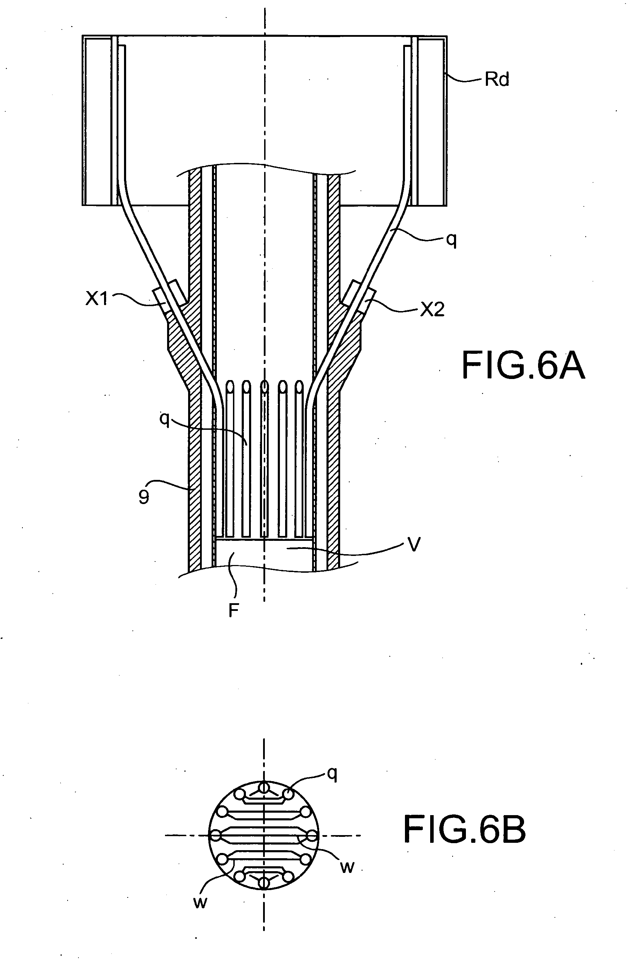

Le convertisseur thermo-acoustique comprend une source chaude (cf. figures 2A, 2B et 3) et une source froide (cf. figures 5 et 6A-6B). La source chaude comprend :
- une pièce métallique monobloc constituée d'une paroi cylindrique 1 dans laquelle sont forés des caloducs 2 et d'une paroi transversale 7 qui sépare la paroi cylindrique 1 en une première partie de paroi cylindrique la et une deuxième partie de paroi cylindrique 1b,
- un hublot 3, et
- un bouclier thermique 4 dans lequel est inséré un bloc 5 d'éléments thermiquement conducteurs apte à générer des ondes acoustiques dans un fluide thermodynamique sous l'effet d'un gradient de pression.

L'ensemble constitué de la paroi transversale 7, de la première partie de paroi cylindrique 1a et du hublot 3 constitue un four solaire dans lequel convergent des rayons lumineux L. Les rayons lumineux L pénètrent dans le four solaire par le hublot 3.

L'espace situé au-delà de la paroi 7, du côté de la deuxième partie de paroi cylindrique 1b, contient un fluide thermodynamique sous pression F qui est également présent dans l'ensemble de la source froide, au-delà de l'ensemble constitué du bouclier thermique 4 et du bloc 5. Le fluide thermodynamique sous pression F est préférentiellement un métal alcalin fondu tel que, par exemple, du sodium fondu, de l'eutectique Na-K fondu ou du lithium fondu.

Les caloducs 2 forés dans la paroi 1 ont préférentiellement une forme de tube dont l'axe est sensiblement parallèle à l'axe du cylindre que constitue la paroi 1. Les caloducs s'étendent de part et d'autre de la paroi 7 et sont distribués, préférentiellement, de manière uniforme sur la paroi cylindrique 1. La pièce métallique monobloc constituée de la paroi cylindrique 1 dans laquelle sont forés les caloducs 2 et de la paroi transversale 7 est préférentiellement réalisée en Inconel 601. A titre d'exemple non limitatif, le diamètre interne D et la longueur L de la pièce métallique monobloc sont respectivement égaux à 300mm et 400mm. Le diamètre d des caloducs est, par exemple, égal à 25mm.

Les caloducs 2 ont pour fonction de transporter la chaleur émise par le four solaire vers le liquide thermodynamique sous pression F qui est contenu dans le volume défini par la paroi 7, la deuxième partie de paroi cylindrique 1b et l'ensemble que constitue le bouclier thermique 4 et le bloc 5. Les caloducs 2 contiennent un fluide thermodynamique tel que, par exemple, du sodium à la pression atmosphérique. De façon préférentielle, l'intérieur des caloducs 2 est équipé d'un habillage permettant d'organiser des écoulements du fluide thermodynamique qu'ils contiennent entre des zones d'évaporation et de condensation.

Le bloc 5 d'éléments thermiquement conducteurs peut être réalisé de différentes manières. Il peut être constitué, par exemple, d'un bloc de plaques parallèles espacées les unes des autres et fixées les unes aux autres, par exemple par soudure (cf. figures 2A et 2C). Les plaques peuvent être métalliques ou non. Un tel bloc de plaques, communément appelé « stack », est maintenu en position par un panier 6 dont la prolongation, du côté de la source froide, forme une veine V qui constitue un canal pour la propagation des ondes acoustiques (cf. figure 1). Les plaques ont, par exemple, une épaisseur de 0,7mm et sont espacées, par exemple, de 0,7 à 1mm.

Selon une variante de l'invention, l'efficacité des échanges thermiques peut être augmentée par l'adjonction d'ailettes 8 usinées dans la masse qui relient les caloducs 2 au panier 6 (cf. figure 2C).

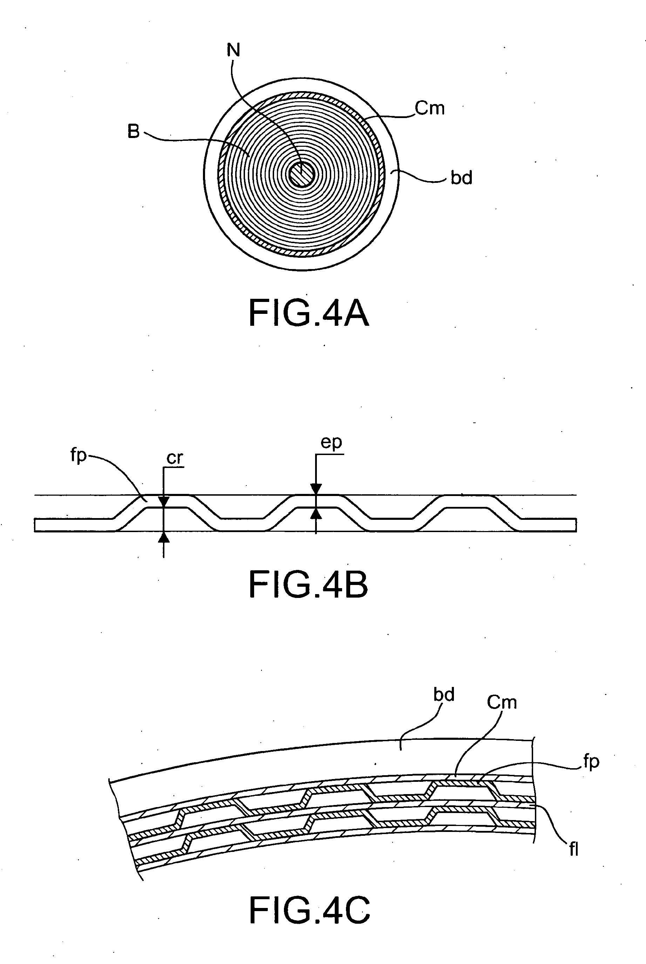

Selon un autre mode de réalisation, le bloc 5 est constitué d'une bobine B dont les spires sont espacées les unes des autres (cf. figures 4A-4C). La bobine B est montée dans une ceinture métallique Cm entourée d'une bague diélectrique bd. La ceinture Cm et la bague diélectrique bd ont la même fonction que le panier 6 mentionné précédemment. Selon le mode de réalisation préférentiel, la bobine B est réalisée à l'aide d'un feuillard plissé fp et d'un feuillard lisse fl qui sont enroulés, l'un dans l'autre, autour d'un noyau N. Ce sont alors les plis du feuillard plissé fp qui éloignent les spires les unes des autres. La bobine B est montée dans le convertisseur CTA de telle sorte que son axe soit sensiblement parallèle à l'axe des parois cylindriques du convertisseur. Le feuillard plissé est mis en forme de façon connue en soi par le passage d'une feuille métallique entre deux rouleaux dont les surfaces portent les formes du plissé respectivement en bosses et en creux. A titre d'exemple non limitatif, un feuillard a une épaisseur ep égale, par exemple, à 0,7mm. Le creux cr d'un pli de feuillard plissé fp est, par exemple, sensiblement égal à 0,7mm. Les surfaces des feuillards peuvent être traitées en surface par des dépôts métalliques ou céramiques ou recevoir des corrugations.

Du point le plus chaud de la source chaude au point le plus froid de la source froide, le convertisseur constitue une capacité sous pression. A titre d'exemple non limitatif, selon l'invention, cette capacité sous pression peut avantageusement résister, à son extrémité la plus chaude, à une pression de 200 bars et à une température de 1000°K. La position géométrique du bloc 5 est définie, dans la capacité sous pression, pour que des ondes de pression soient générées quand les extrémités des éléments thermiquement conducteurs qui le constituent sont soumises à une différence de température.

La figure 5 représente un premier mode de réalisation de source froide du convertisseur thermo-acoustique de l'invention. La source froide comprend :
a) un tube cylindrique creux 9 dans lequel est intégré un échangeur évaporateur 10 équipé de caloducs, et
b) un échangeur condenseur 11 disposé en périphérie du convertisseur magnetohydrodynamique CMHD et dans lequel pénètrent les caloducs de l'échangeur évaporateur 10.

Un fluide thermodynamique parcourt l'échangeur évaporateur 10. Le tube cylindrique creux 9 dans lequel est intégré l'échangeur évaporateur 10 a une paroi latérale montée dans le prolongement de la paroi latérale de la source chaude. Une pièce ou un revêtement thermiquement isolant 12, par exemple de la céramique ou de l'alumine, sépare les parois latérales des sources chaude et froide afin d'établir une isolation thermique entre les deux parois. La zone froide du convertisseur 11 est maintenue à une température souhaitée par l'échangeur évaporateur 10 intégré dans la paroi du tube et dont le fluide thermodynamique se vaporise préférentiellement à basse pression et, par exemple, à une température de 80°C. La source froide est ainsi réalisée par la coopération de l'échangeur évaporateur avec le condenseur refroidi par l'air ambiant en convection naturelle.

Le fonctionnement du système nécessite de limiter les pertes thermiques par convection à l'extérieur de la partie chaude du module : c'est le rôle du calorifuge 13 disposé tout autour du convertisseur thermo-acoustique CTA. Un bon fonctionnement du système nécessite aussi que le bloc 5 ne soit pas bipassée par un flux de chaleur qui diminuerait le rendement. Ce flux de bipasse est limité, d'une part, par le bouclier thermique 4 qui bloque la convection dans le métal liquide vers la source froide et, d'autre part, par le joint ou le revêtement thermiquement isolant 12.

Comme cela a déjà été mentionné précédemment, le panier de positionnement 6 du bloc 5 se prolonge dans la zone froide du convertisseur thermo-acoustique sous la forme d'une veine V. Le panier de positionnement 6 et la veine V ont pour fonction de maintenir le bloc 5 en position, de servir de guide aux ondes acoustiques et de supporter le bouclier thermique 4 qui limite le bipasse thermique du bloc 5.

Quand le générateur d'énergie électrique passe de la température ambiante à ses conditions de fonctionnement, le fluide thermodynamique qui emplit le dispositif fond et se dilate. Un volume de gaz neutre disposé à la partie extrême de la source froide permet avantageusement une certaine expansion du fluide thermodynamique et le réglage de la pression de fonctionnement par le volume qui lui est consacré.

Dans un appendice froid de la partie inférieure du générateur d'énergie électrique est prépositionné un volume d'un liquide apte à détruire le fluide thermodynamique qui s'échapperait de la capacité sous pression avec une cinétique modérée (non représenté sur la figure).

Les figures 6A et 6B représentent, respectivement, une vue en coupe longitudinale et une vue en coupe transversale d'une source froide selon un deuxième mode de réalisation de l'invention. Un ensemble de caloducs q, par exemple des caloducs à alcool, sont ici placés, en partie, sur une fraction de la longueur de la paroi intérieure qui délimite la veine V. Les caloducs q sont préférentiellement répartis uniformément sur la fraction de paroi intérieure. Des trous alignés pratiqués dans la paroi de la veine V et dans la paroi 9 permettent d'extraire les caloducs q du convertisseur CTA. Des éléments d'étanchéité X1, X2 isolent thermiquement la paroi 9 de l'extérieur au niveau des trous d'extraction des caloducs q. Les caloducs q, une fois extraits du convertisseur CTA, pénètrent dans un radiateur à ailettes Rd. Selon un perfectionnement du deuxième mode de réalisation de la source froide de l'invention, les caloducs q sont reliés par des ailettes w à l'intérieur de la veine V (cf. figure 6B).

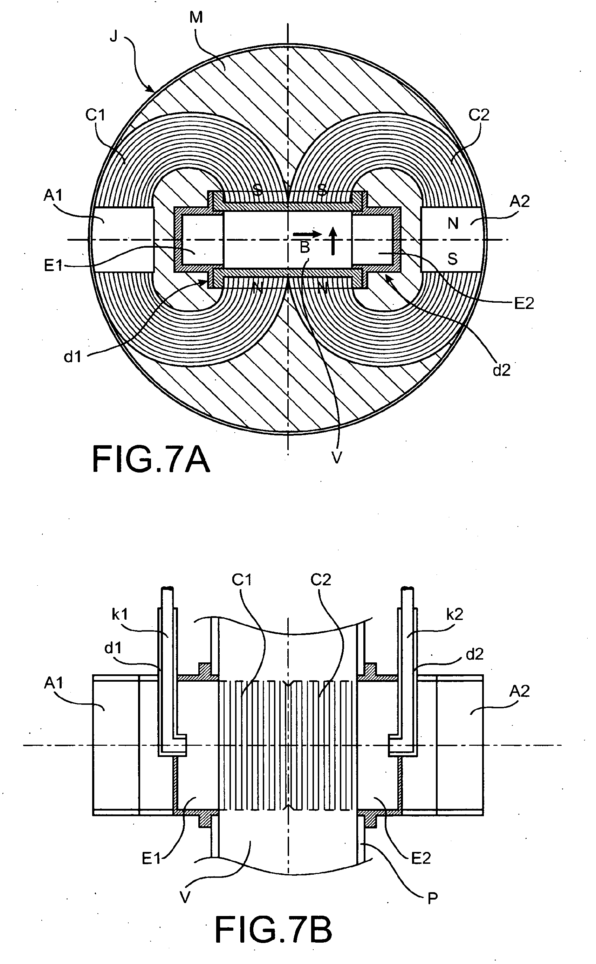

Le convertisseur magnétohydrodynamique CMHD placé dans la partie froide du générateur permet de convertir les ondes acoustiques en courant électrique alternatif. Un premier exemple de convertisseur magnétohydrodynamique CMHD est représenté sur les figures 7A et 7B.

La figure 7A est une vue en coupe transversale du convertisseur CMHD et la figure 7B en est une vue en coupe longitudinale.

Le convertisseur comprend, dans une jupe de maintien J :
- une fraction de la veine V dans laquelle le fluide thermodynamique F oscille autour d'une position médiane en ondes stationnaires,
- un circuit magnétique (A1, C1, A2, C2) capable de générer dans la fraction de veine V un champ magnétique *B̅* perpendiculaire à la direction d'écoulement oscillant des ondes stationnaires et d'intensité comprise, par exemple, entre 1 et 2 Tesla, et
- deux électrodes E1, E2 alignées selon un axe perpendiculaire à la direction de l'écoulement oscillant et à la direction du champ magnétique *B̅*.

Le circuit magnétique est constitué de deux aimants permanents A1, A2 dont les flux se rebouclent par l'intermédiaire de deux circuits magnétiques feuilletés C1, C2 en forme de demi tore. Le métal qui constitue les circuits magnétiques C1 et C2 est préférentiellement à haute perméabilité magnétique. La paroi P de la veine V est de faible épaisseur et est constituée d'un métal magnétique, par exemple inconel ou hastelloy. La paroi P permet ainsi de laisser passer le flux magnétique sans le dévier.

Les électrodes E1 et E2 sont constituées de blocs prismatiques de métal amagnétique et sont électriquement isolées de la veine V par les dépôts de céramique respectifs d1 et d2 qui les enrobent. Des câbles collecteurs k1 et k2, électriquement isolés de la veine V, sont électriquement reliés aux électrodes respectives E1 et E2.

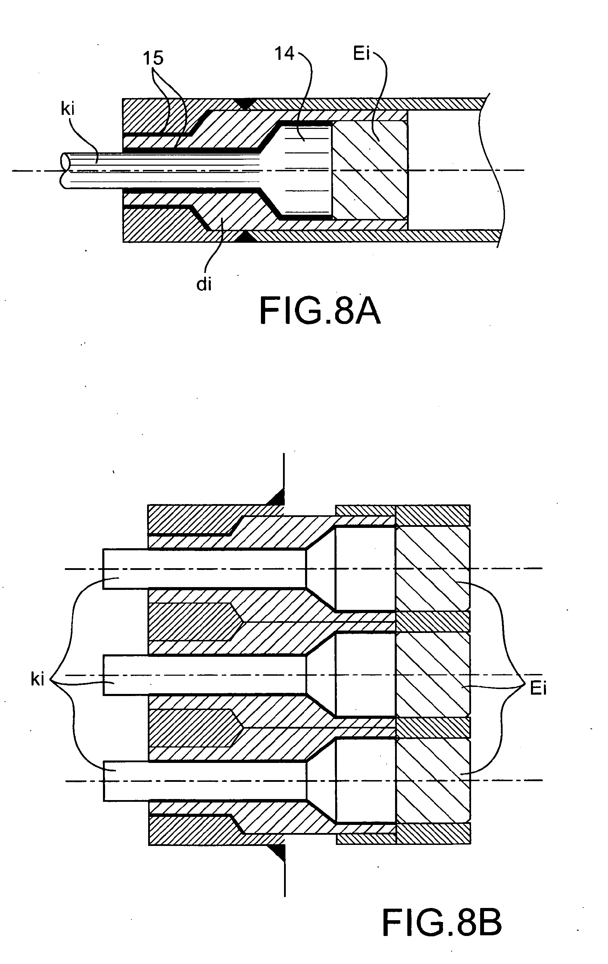

Les figures 8A et 8B représentent un montage possible du raccord diélectrique étanche qui enrobe le contact électrique entre une électrode Ei (i=1, 2) et le conducteur ki.

L'extrémité 14 du conducteur ki vient appuyer sur le bloc prismatique qui constitue l'électrode Ei. L'élément diélectrique di est soudé sur le conducteur ki par une brasure 15. On peut segmenter une même électrode en multipliant les conducteurs (cf. figure 8B). Une segmentation de l'électrode présente l'avantage de pouvoir augmenter la tension en mettant les couples d'électrodes en série.

Afin de tenir une pression interne dans la veine égale, par exemple, à 200 bars, les circuits magnétiques C1, C2, les aimants permanents A1, A2, les électrodes E1, E2 et les conducteurs de sortie k1, k2 sont noyés dans une matrice de mousse syntactique M qui transmet les efforts de pression à la jupe de maintien J (cf. figure 7A).

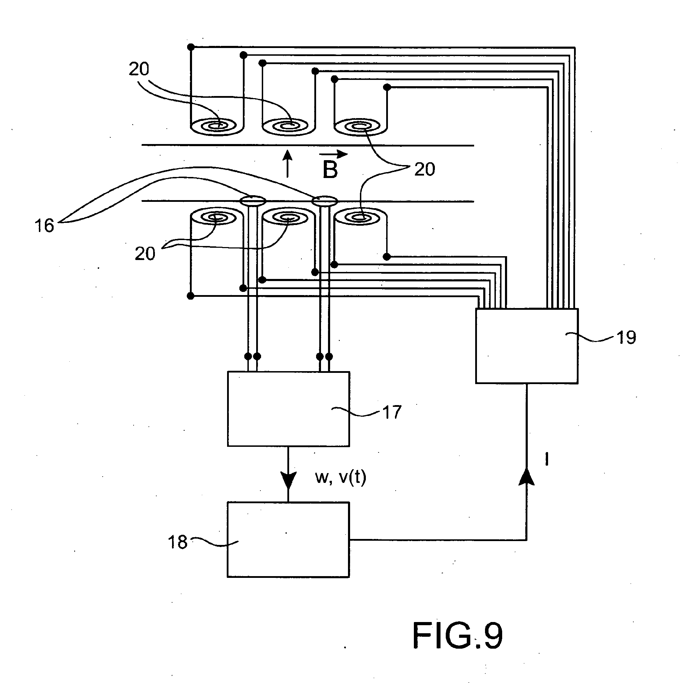

La figure 9 représente un convertisseur magnétohydrodynamique selon un deuxième mode de réalisation de l'invention.

Deux capteurs à induction 16 sont reliés à une chaîne de mesures 17 qui détermine la pulsation ω et la vitesse v(t) de déplacement en fonction du temps de la lame de fluide thermodynamique qui oscille. A partir de ces mesures, un processeur rapide 18 génère une information de commande I qui pilote un générateur de courant 19. Le générateur de courant 19 est relié à des bobines 20. Les courants induits dans les bobines 20 créent dans la veine V un champ magnétique oscillant *B̅* déphasé par rapport à la vitesse v(t). Ce procédé de commande de bobines est analogue à celui utilisé dans les amortisseurs magnétiques actifs.

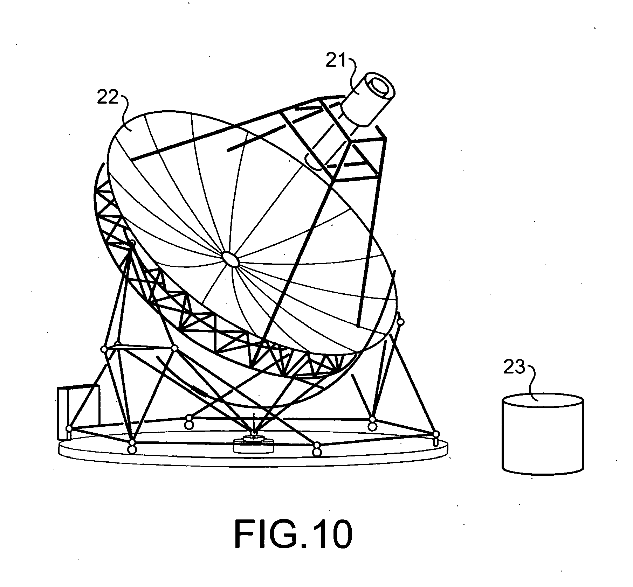

La figure 10 représente un exemple de centrale électrique qui comprend un générateur d'électricité selon l'invention.

La centrale électrique comprend essentiellement un générateur électrique selon l'invention 21 et une parabole 22 de concentration de la lumière solaire. Le hublot du générateur électrique 21 est positionné sensiblement au niveau de la zone focale de la parabole de concentration. La parabole de concentration 22 a, par exemple, une surface d'environ 100m² et concentre 50 à 80 KW d'énergie thermique à environ 1000°K sur la chaudière de son foyer. Selon un perfectionnement de l'invention, la centrale électrique comprend un dispositif 23 de stockage de l'énergie (batterie, réservoir d'hydrogène, etc.) qui, lorsqu'il est relié à la source chaude du convertisseur thermo-acoustique, permet la génération d'énergie en l'absence de rayonnement solaire.

## Revendications

1. Convertisseur thermo-acoustique comprenant une source chaude (1, 2, 7, 3), une source froide (9, 10, 11), un bloc (5) d'éléments thermiquement conducteurs espacés les uns des autres et fixés les uns aux autres, le bloc (5) étant situé entre la source chaude et la source froide de façon que s'établisse un gradient de température entre des premières extrémités des éléments thermiquement conducteurs et des deuxièmes extrémités des éléments thermiquement conducteurs situées à l'opposé des premières extrémités, et un fluide thermodynamique (F) qui emplit l'espace entre les éléments thermiquement conducteurs et un espace environnant les éléments thermiquement conducteurs de sorte que des ondes acoustiques s'établissent, dans le fluide thermodynamique qui emplit l'espace environnant les éléments thermiquement conducteurs, sous l'effet du gradient de température, **caractérisé en ce que** la source chaude comprend une pièce métallique monobloc constituée d'une paroi cylindrique (1) dans laquelle sont forés des caloducs (2) et d'une paroi transversale (7) qui sépare la paroi cylindrique en une première partie (1a) de paroi cylindrique et une deuxième partie (1b) de paroi cylindrique, les caloducs s'étendant de part et d'autre de la paroi transversale, la paroi transversale (7), la première partie de paroi cylindrique et une paroi supplémentaire (3) située en regard de la paroi transversale (7) par rapport à la première partie (1a) de paroi cylindrique délimitant un volume qui contient une source de chaleur.

2. Convertisseur thermo-acoustique selon la revendication 1, dans lequel la source chaude comprend un bouclier thermique (4) inséré dans la deuxième partie de paroi cylindrique (1b), au-delà d'une extrémité des caloducs (2), et qui isole thermiquement la source chaude de la source froide, le bouclier thermique (4) étant constitué d'une paroi ouverte par un trou débouchant dans lequel est placé le bloc (5) d'éléments thermiquement conducteurs, le fluide thermodynamique (F) emplissant l'espace situé entre la paroi transversale (7), la deuxième partie (1b) de paroi cylindrique et la structure constituée du bouclier thermique (4) et du bloc d'éléments thermiquement conducteurs (5).

3. Convertisseur thermo-acoustique selon l'une quelconque des revendications 1 ou 2, dans lequel le bloc d'éléments thermiquement conducteurs (5) est maintenu par une structure (6, Cm, bd) qui enserre le bloc d'éléments thermiquement conducteurs (5).

4. Convertisseur thermo-acoustique selon la revendication 3, dans lequel la structure (6, Cm, bd) qui enserre le bloc d'éléments thermiquement conducteurs (5) se prolonge à l'intérieur de la paroi cylindrique (9) de la source froide par une paroi (P) qui forme une veine (V) dans laquelle les ondes acoustiques se propagent.

5. Convertisseur thermo-acoustique selon la revendication 4, dans lequel la source froide comprend une paroi cylindrique (9) reliée à la paroi cylindrique (1) de la source chaude et séparée de la paroi cylindrique de la source chaude par un revêtement thermiquement isolant (12).

6. Convertisseur thermo-acoustique selon la revendication 5, dans lequel le revêtement thermiquement isolant (12) est un revêtement de céramique.

7. Convertisseur thermo-acoustique selon l'une quelconque des revendications 5 ou 6, dans lequel un échangeur évaporateur (10) dans lequel circule un fluide thermodynamique est intégré dans la paroi (9) de la source froide.

8. Convertisseur thermo-acoustique selon la revendication 7, dans lequel le fluide thermodynamique qui circule dans l'échangeur évaporateur (10) est de l'alcool ou du méthanol.

9. Convertisseur thermo-acoustique selon l'une des revendications 7 ou 8 comprenant un échangeur condenseur (11) refroidi en convection naturelle par l'air ambiant.

10. Convertisseur thermo-acoustique selon l'une des revendications 5 ou 6, dans lequel la source froide comprend un ensemble de caloducs de refroidissement (q) répartis, sur la face intérieure de la paroi (P) qui délimite la veine (V), entre une première de leur extrémité et un premier point intermédiaire, des trous étant pratiqués dans la paroi (P) qui délimite la veine (V) et dans la paroi (9) de la source froide pour permettre d'extraire les caloducs de refroidissement du convertisseur thermo-acoustique, les caloducs de refroidissement (q) étant introduits dans un radiateur (Rd) entre un deuxième point intermédiaire et une deuxième de leur extrémité, opposée à leur première extrémité.

11. Convertisseur thermo-acoustique selon la revendication 10, dans lequel les parties de caloducs de refroidissement (q) qui sont placées à l'intérieur de la veine (V) sont reliées par des ailettes (w).

12. Convertisseur thermo-acoustique selon l'une quelconque des revendications précédentes, dans lequel les caloducs (2) contiennent un fluide thermodynamique.

13. Convertisseur thermo-acoustique selon la revendication 12, dans lequel le fluide thermodynamique contenu dans les caloducs (2) est du sodium à la pression atmosphérique.

14. Convertisseur thermo-acoustique selon l'une quelconque des revendications 12 ou 13, dans lequel l'intérieur les caloducs (2) est équipé d'un habillage permettant d'organiser des écoulements entre des zones d'évaporation et des zones de condensation du fluide thermodynamique qu'ils contiennent.

15. Convertisseur thermo-acoustique selon l'une quelconque des revendications précédentes dans lequel le fluide thermodynamique qui emplit l'espace entre les éléments thermiquement conducteurs et un espace environnant les éléments thermiquement conducteurs est un métal alcalin fondu.

16. Convertisseur thermo-acoustique selon la revendication 15, dans lequel le métal alcalin fondu est du sodium fondu, de l'eutectique Na-K fondu ou du lithium fondu.

17. Convertisseur thermo-acoustique selon l'une quelconque des revendications précédentes, dans lequel un calorifuge (13) entoure la source chaude et la source froide.

18. Convertisseur thermo-acoustique selon l'une quelconque des revendications précédentes, dans lequel le bloc (5) d'éléments thermiquement conducteurs est un ensemble de plaques thermiquement conductrices fixées les unes aux autres par soudure.

19. Convertisseur thermo-acoustique selon l'une quelconque des revendications 1 à 18, dans lequel le bloc (5) d'éléments thermiquement conducteurs est une bobine (B) faite d'un feuillard plissé (fp) et d'un feuillard lisse (fl) enroulés l'un dans l'autre.

20. Convertisseur thermo-acoustique selon l'une quelconque des revendications précédentes dans lequel une enceinte de sécurité permet de récupérer une fuite du fluide thermodynamique qui emplit l'espace entre les plaques et l'espace environnant les plaques et de détruire ladite fuite au moyen d'un dispositif de neutralisation pré-installé dans un appendice froid du convertisseur.

21. Convertisseur thermo-acoustique selon l'une quelconque des revendications précédentes, dans lequel la paroi supplémentaire (3) est un hublot transparent à la lumière, de sorte que la source de chaleur constitue un four solaire dès lors que la lumière (L) du soleil traverse la paroi supplémentaire (3).

22. Générateur d'énergie électrique comportant un convertisseur thermo-acoustique qui produit des ondes acoustiques à partir d'un gradient de chaleur et un convertisseur magnétohydrodynamique qui produit de l'électricité à partir des ondes acoustiques stationnaires créées par le convertisseur thermo-acoustique, **caractérisé en ce que** le convertisseur thermo-acoustique est un convertisseur selon l'une quelconque des revendications 1 à 21.

23. Générateur d'énergie électrique selon la revendication 22, dans lequel le convertisseur magnétohydrodynamique comprend :
- une veine (V) dans laquelle oscillent les ondes acoustiques,
- un circuit magnétique (A1, C1, A2, C2) capable de faire régner dans la veine (V) un champ magnétique perpendiculaire à la direction d'écoulement des ondes acoustiques,
- deux électrodes (E1, E2) situées de part et d'autre de la veine (V), électriquement isolées de la veine (V) et alignées selon un axe perpendiculaire à la direction d'écoulement des ondes acoustiques et à la direction du champ magnétique, et
- deux câbles collecteurs (k1, k2) électriquement isolés de la veine (V) et reliés, respectivement, aux deux électrodes (E1, E2).

24. Générateur d'énergie électrique selon la revendication 23, dans lequel les électrodes (E1, E2) sont des blocs prismatiques de métal amagnétique et sont électriquement isolées de la veine (V) par des dépôts de céramique (d1, d2) qui enrobent les électrodes.

25. Générateur d'énergie électrique selon la revendication 22, dans lequel le convertisseur magnéto-hydro-dynamique comprend :
- une veine (V) dans laquelle oscillent les ondes acoustiques,
- des capteurs à induction (16) et une chaîne de mesure (17) qui déterminent la pulsation (ω) et la vitesse de déplacement par rapport au temps (v(t)) des ondes acoustiques,
- un processeur (18) qui génère une information de commande (I) à partir des mesures de pulsation et de vitesse de déplacement,
- un générateur de courant (19) commandé par l'information de commande (I), et
- un ensemble de bobines (20) situées de part et d'autres de la veine (V) et reliées au générateur de courant.

26. Centrale électrique qui comprend un générateur d'électricité, **caractérisé en ce que** le générateur d'électricité est un générateur (21) selon l'une quelconque des revendications 22 à 25, dans le cas où le convertisseur thermo-acoustique est un convertisseur selon la revendication 21, et **en ce qu'**elle comprend une parabole (22) de concentration de la lumière solaire, le hublot (3) de la source de chaleur étant alors positionné sensiblement au niveau de la zone focale de la parabole de concentration.

27. Centrale électrique selon la revendication 26 qui comprend un dispositif de stockage d'énergie (23).

## Claims

1. Thermo-acoustic converter comprising a hot source (1, 2, 7, 3), a cold source (9, 10, 11), a block (5) of thermally conductive elements spaced apart from each other and fastened to each other, wherein the block (5) is situated between the hot source and the cold source so as to establish a temperature gradient between first ends of the thermally conductive elements and second ends of the thermally conductive elements situated opposite the first ends, and a thermodynamic fluid (F) that fills the space between the thermally conductive elements and a space surrounding the thermally conductive elements such that acoustic waves are established, in the thermodynamic fluid that fills the space surrounding the thermally conductive elements, under the effect of the temperature gradient, **characterised in that** the hot source comprises a one piece metal component comprising a cylindrical wall (1) in which are drilled heat pipes (2) and a transverse wall (7) that divides the cylindrical wall into a first cylindrical wall part (1a) and a second cylindrical wall part (1b), wherein the heat pipes extend on either side of the transverse wall, the transverse wall (7), the first cylindrical wall part and an additional wall (3) situated opposite the transverse wall (7) with respect to the first cylindrical wall part (1a) delimiting a volume that contains a heat source.

2. Thermo-acoustic converter according to claim 1, in which the hot source comprises a thermal shield (4) inserted in the second cylindrical wall part (1b), beyond one end of the heat pipes (2), and which thermally insulates the hot source from the cold source, wherein the thermal shield (4) consists of a wall opened by a through hole in which is placed the block (5) of thermally conductive elements, the thermodynamic fluid (F) filling the space situated between the transverse wall (7), the second cylindrical wall part (1b) and the structure consisting of the thermal shield (4) and the block of thermally conductive elements (5).

3. Thermo-acoustic converter according to claim 1 or 2, in which the block of thermally conductive elements (5) is maintained by a structure (6, Cm, bd) that fits tightly round the block of thermally conductive elements (5).

4. Thermo-acoustic converter according to claim 3, in which the structure (6, Cm, bd) that fits tightly round the block of thermally conductive elements (5) extends into the interior of the cylindrical wall (9) of the cold source by means of a wall (P) that forms a vein (V) in which the acoustic waves propagate.

5. Thermo-acoustic converter according to claim 4, in which the cold source comprises a cylindrical wall (9) connected to the cylindrical wall (1) of the hot source and separated from the cylindrical wall of the hot source by a thermally insulating coating (12).

6. Thermo-acoustic converter according to claim 5, in which the thermally insulating coating (12) is a ceramic coating.

7. Thermo-acoustic converter according to claim 5 or 6, in which an exchanger evaporator (10) in which a thermodynamic fluid circulates is incorporated in the wall (9) of the cold source.

8. Thermo-acoustic converter according to claim 7, in which the thermodynamic fluid that circulates in the exchanger evaporator (10) is alcohol or methanol.

9. Thermo-acoustic converter according to claim 7 or 8, comprising an exchanger condenser (11) cooled through natural convection by ambient air.

10. Thermo-acoustic converter according to claim 5 or 6, in which the cold source comprises a set of cooling heat pipes (q) spread out, on the interior face of the wall (P) that delimits the vein (V), between a first of their ends and a first intermediate point, holes being formed in the wall (P) that delimits the vein (V) and in the wall (9) of the cold source to enable the cooling heat pipes to be extracted from the thermo-acoustic converter, wherein the cooling heat pipes (q) are introduced into a radiator (Rd) between a second intermediate point and a second of their ends, opposite their first end.

11. Thermo-acoustic converter according to claim 10, in which the parts of the cooling heat pipes (q) that are placed inside the vein (V) are connected by fins (w).

12. Thermo-acoustic converter according to any of claims 1 to 11, in which the heat pipes (2) contain a thermodynamic fluid.

13. Thermo-acoustic converter according to claim 12, in which the thermodynamic fluid contained in the heat pipes (2) is sodium at atmospheric pressure.

14. Thermo-acoustic converter according to claim 12 or 13, in which the interior of the heat pipes (2) is equipped with a lining that makes it possible to organise flows between the evaporation zones and the condensation zones of the thermodynamic fluid that they contain.

15. Thermo-acoustic converter according to any of claims 1 to 14, in which the thermodynamic fluid that fills the space between the thermally conductive elements and a space surrounding the thermally conductive elements is a molten alkaline metal.

16. Thermo-acoustic converter according to claim 15, in which the molten alkaline metal is molten sodium, molten eutectic Na-K or molten lithium.

17. Thermo-acoustic converter according to any of claims 1 to 16, in which a heat insulator (13) surrounds the hot source and the cold source.

18. Thermo-acoustic converter according to any of claims 1 to 17, in which the block (5) of thermally conductive elements is a set of thermally conducting plates fastened together by welding.

19. Thermo-acoustic converter according to any of claims 1 to 18, in which the block (5) of thermally conductive elements is a coil (B) made of a pleated strip (fp) and a smooth strip (fl) wound together.

20. Thermo-acoustic converter according to any of claims 1 to 19, in which a safety chamber enables a leak of the thermodynamic fluid that fills the space between the plates and the space surrounding the plates to be recovered and to eliminate said leak by means of a neutralisation device pre-installed in a cold appendage of the converter.

21. Thermo-acoustic converter according to any of claims 1 to 20, in which the additional wall (3) is a window transparent to light, such that the heat source constitutes a solar furnace from the moment that sunlight (L) traverses the additional wall (3).

22. Electrical energy generator comprising a thermo-acoustic converter that produces acoustic waves from a heat gradient and a magnetohydrodynamic converter that produces electricity from the stationary acoustic waves created by the thermo-acoustic converter, **characterised in that** the thermo-acoustic converter is a converter according to any of claims 1 to 21.

23. Electrical energy generator according to claim 22, in which the magnetohydrodynamic converter comprises:
- a vein (V) in which the acoustic waves oscillate,
- a magnetic circuit (A1, C1, A2, C2) capable of creating in the vein (V) a magnetic field perpendicular to the direction of flow of the acoustic waves,
- two electrodes (E1, E2) situated on either side of the vein (V), electrically insulated from the vein (V) and aligned along an axis perpendicular to the direction of flow of the acoustic waves and the direction of the magnetic field, and
- two collector cables (k1, k2) electrically insulated from the vein (V) and connected, respectively, to the two electrodes (E1, E2).

24. Electrical energy generator according to claim 23, in which the electrodes (E1, E2) are prismatic blocks of non-magnetic metal and are electrically insulated from the vein (V) by ceramic deposits (d1, d2) that coat the electrodes.

25. Electrical energy generator according to claim 22, in which the magnetohydrodynamic converter comprises:
- a vein (V) in which the acoustic waves oscillate,
- induction sensors (16) and a measurement chain (17) that determine the pulsation (ω) and the rate of moving of the acoustic waves with respect to time (v(t)),
- a processor (18) that generates a command information (I) from the pulsation and rate of moving measurements,
- a current generator (19) commanded by the command information (I), and
- a set of coils (20) situated on either side of the vein (V) and connected to the current generator.

26. Electric power plant that comprises an electricity generator, **characterised in that** the electricity generator is a generator (21) according to any of claims 22 to 25, in the case where the thermo-acoustic converter is a converter according to claim 21, and **in that** it comprises a sunlight concentrating parabola (22), the window (3) of the heat source then being positioned substantially at the level of the focal zone of the concentrating parabola.

27. Electric power plant according to claim 26 that comprises an energy storage device (23).

## Patentansprüche

1. Thermo-akustischer Wandler, welcher eine Wärmequelle (1, 2, 7, 31), eine Kältequelle (9, 10, 11), sowie einen Block (5) von wärmeleitenden Elementen umfasst, die mit Abstand voneinander und mit einander fest verbunden angeordnet sind, wobei der Block (5) zwischen der Wärmequelle und der Kältequelle so angeordnet ist, dass sich zwischen ersten Enden der wärmeleitenden Elemente und diesen ersten Enden entgegengesetzen zweiten Enden der wärmeleitenden Elemente ein Temperaturgradient einstellt, sowie mit einem thermodynamischen Strömungsmittel (F), welches den Raum zwischen den wärmeleitenden Elementen und einen die wärmeleitenden Elemente umgebenden Raum ausfüllt derart, daß sich in dem die wärmeleitenden Elemente umgebenden Raum unter
der Wirkung des Temperaturgradienten akustische Wellen einstellen, **dadurch gekennzeichnet, dass** die Wärmequelle ein metallisches Monoblock-Teil umfasst, das aus einer Zylinderwandung (1), in welcher Wärme- bzw. Calo-Dukte (2) gebohrt sind, besteht sowie aus einer Querwandung (7), welche die Zylinderwandung in einen ersten Teil (1a) der Zylinderwandung und in einen zweiten Teil (1 b) der Zylinderwandung auftrennt, wobei die Wärme- bzw. Calo-Dukte sich beidseits der Querwandung erstrecken, und wobei der erste Teil der Zylinderwandung sowie eine zusätzliche Wandung (3), welche bezogen auf den ersten Teil (1a) der Zylinderwandung der Zwischen-wandung gegenüberliegt, ein Volumen begrenzen, welches eine Wärmequelle enthält.

2. Thermo-akustischer Wandler nach Anspruch 1, bei welchem die Wärmequelle eine thermische Abschirmung (4) umfasst, die in den zweiten Teil der Zylinderwandung (1 b) jenseits des einen Endes der Wärme- bzw. Calo-Dukte (12) eingesetzt ist und welche die Wärmequelle thermisch von der Kältequelle isoliert, dass die Wärmeabschirmung aus einer mit einer Mündungsöffnung versehenen Wandung besteht, in welcher der Block (5) von wärmeleitenden Elementen angeordnet ist, wobei das thermodynamische Strömungsmittel (F) den zwischen der Querwandung (7), dem zweiten Teil (1 b) der Zylinderwandung und dem Gebilde aus der Wärmeabschirmung (4) und dem Block (5) von wärmeleitenden Elementen bestehenden Raum ausfüllt.

3. Thermo-akustischer Wandler nach einem der Ansprüche 1 oder 2, bei welchem der Block (5) von wärmeleitenden Elementen von einer Struktur (6, Cm, bd) gehalten ist, welche den Block (5) von wärmeleitenden Elementen umschließt.

4. Thermo-akustischer Wandler nach Anspruch 3, bei welchem die den Block (5) von wärmeleitenden Elementen umschliueßende Struktur (6, Cm, bd) sich im Inneren der Zylinderwandung (9) der Kältequelle in einer Wandung (P) fortsetzt, welche einen Gang für die Fortpflanzung der akustischen Wellen bildet.

5. Thermo-akustischer Wandler nach Anspruch 4, bei welchem die Kältequelle eine Zylinderwandung umfasst, welche mit der Zylinderwandung (1) der Wärmequelle verbunden und von der Zylinderwandung der Wärmequelle durch eine wärmeisolierende Auskleidung getrennt ist.

6. Thermo-akustischer Wandler nach Anspruch 5, bei welchem die wärmeisolierende Auskleidung (12) eine Keramikauskleidung ist.

7. Thermo-akustischer Wandler nach einem der Ansprüche 5 oder 6, bei welchem ein Verdampfer-Wärmetauscher (10), in welchem ein thermodynamisches Strömungsmittel zirkuliert, in der Wandung (9) der Kältequelle integriert ist.

8. Thermo-akustischer Wandler nach Anspruch 7, bei welchem das in dem Verdampfer-Wärmetauscher (10) zirkulierende thermodynamische Strömungsmittel Alkohol oder Methanol ist.

9. Thermo-akustischer Wandler nach einem der Ansprüche 7 oder 8, welcher einen Kondensor-Wärmetauscher (11) umfasst, der mittels natürlicher Konvektion durch Umgebungsluft gekühlt wird.

10. Thermo-akustischer Wandler nach einem der Ansprüche 5 oder 6, bei welchem die Kältequelle ein Ensemble bzw. eine Gruppe von Kühl-Calo-Dukten (q) umfasst, die
- auf der Innenseite der den Akustik-Gang (V) begrenzenden Wandung (P) - verieilt sind, zwischen jeweils einem ersten ihrer Enden und einem ersten Zwischenpunkt, wobei in der den Akustik-Gang (V) begrenzenden Wandung (P) und in der Wandung (9) der Kältequelle Öffnungen vorgesehen sind, um die Herausführung der Kühl-Calo-Dukte aus dem thermo-akustischen Wandler zu ermöglichen, und dass die Kühl-Calo-Dukte (q) in einen Radiator (Rd) eingeführt werden, und zwar zwischen einem zweiten Zwischenpunkt und einem ihrem ersten Ende entgegengesetzten zweiten Ende.

11. Thermo-akustischer Wandler nach Anspruch 10, bei welchem die im Inneren des Akustik-Gangs (V) angeordneten Teile der Kühl-Calo-Dukte (q) durch Kühlrippen (w) verbunden sind.

12. Thermo-akustischer Wandler nach einem der vorhergehenden Ansprüche, bei welchem die Calo-Dukte (2) ein thermodynamisches Strömungsmittel enthalten.

13. Thermo-akustischer Wandler nach Anspruch 12, bei welchem das in den Calo-Dukten (2) enthaltene thermodynamische Strömungsmittel Natrium bei atmosphärischem Druck ist.

14. Thermo-akustischer Wandler nach einem der Ansprüche 12 oder 13, bei welchem das Innere der Calo-Dukte (2) mit einer Ummantelung versehen ist , welche die Einrichtung von Strömungsfiüssen zwischen Verdampfungszonen und Kondensationszonen des in ihnen enthaltenen thermodynamischen Strömungsmittels gestatten.

15. Thermo-akustischer Wandler nach einem der vorhergehenden Ansprüche, bei welchem das thermodynamische Strömungsmittel, welches den Raum zwischen den wärmeleitenden Elementen sowie einen diese wärmeleitenden Elemente umgebenden Raum erfüllt, ein geschmolzenes Alkalimetall ist.

16. Thermo-akustischer Wandler nach Anspruch 15, bei welchem das geschmolzene Alkalimetall geschmolzenes Natrium, geschmolzenes Na-K-Eutektikum oder geschmolzenes Lithium ist.

17. Thermo-akustischer Wandler nach einem der vorhergehenden Ansprüche, bei welchem eine Wärmeisolation (13) die Wärmequelle und die Kältequelle umgibt.

18. Thermo-akustischer Wandler nach einem der vorhergehenden Ansprüche, bei welchem der Block (5) wärmeleitender Elemente ein Ensemble bzw. eine Gruppe vorn wärmeleitenden Platten sind, die miteinander mittels Schweissung verbunden sind.

19. Thermo-akustischer Wandler nach einem der Ansprüche 1 bis 18, bei welchem der Block (5) wärmeleitender Elemente ein Wickel (B) aus einem gefältelten Bandmaterial (fp) und aus einem glatten Bandmaterial (fl), die ineinander gewickelt sind, ist.

20. Thermo-akustischer Wandler nach einem der vorhergehenden Ansprüche, bei welchem eine Sicherheitsumschließung bzw. -hülle eine Rückgewinnung einer Leckströmung des den Raum zwischen den Platten und den die Platten umgebenden Raum ausfüllenden thermodynamischen Strömungsmittels und die Beseitigung dieses Leckanteils mit Hilfe einer in einem Kühlansatz des Wandlers varinstallierten Neutralisierungsvorrichtung gestattet.

21. Thermo-akustischer Wandler nach einem der vorhergehenden Ansprüche, bei welchem die zusätzliche Wandung (3) eine für Licht durchlässige Luke bzw. Instrumentfenster ist, derart dass die Wärmequelle einen Sonnenofen darstellt, sobald das Sonnenlicht (L) die zusätzliche Wandlung (3) durchsetzt.

22. Elektrischer Energiegenerator, welcher einen thermo-akustischen Wandler zur Erzeugung akustischer Wellen ausgehend von einem Wärmegradienten und einen magnetohydrodynamischen Wandler zur Erzeugung von Elektrizität ausgehend von durch den thermo-akustischen Wandler erzeugten stationären akustischen Wellen umfasst, **dadurch gekennzeichnet, dass** der thermo-akustische Wandler ein Wandler gemäß einem der Ansprüche 1 bis 21 ist.

23. Elektrischer Energiegenerator nach Anspruch 22, in welchem der magnetohydrodynamische Wandler umfasst:
- einen (Akustik-) Dukt (V), in welchem die akustischen Wellen oszillieren,
- einen magnetischen Kreis (A1, C1, A2, C2), der in dem (Akustik-) Dukt (V) ein zur Wanderrichtung der akustischen Wellen rechtwinkliges Magnetfeld erzeugen kann,
- zwei beidseits dem (Akustik-) Dukt (V) angeordnete Elektroden (E1, E2), die elektrisch gegenüber dem Dukt isoliert und längs einer zur Wanderrichtung der akustischen Wellen und zur Richtung des Magnetfelds rechtwinkligen Achse angeordnet sind; sowie
- zwei elektrisch gegenüber dem (Akustik-) Dukt (V) isolierte und jeweils mit den beiden Elektroden (E1, E2) verbundene Kollektorkabel (k1 , k2).

24. Elektrischer Energiegenerator nach Anspruch 23, bei welchem die Elektroden (E1, E2) prismatische Blöcke aus amagnetischem Metall und gegenüber dem (Akustik) Dukt (V) durch Keramikabscheidungen (d1, d2) isoliert sind, welche die Elektroden umkleiden.

25. Elektrischer Energiegenerator nach Anspruch 22, in welchem der magnetohydrodynamische Generator umfasst:
- einen (Akustik-) Dukt (V), in welchem die Akustikwellen oszillieren,
- Jnduktionsmeßfühler (16) und eine Messkette (17), welche die Schwingungspulsation (w) und die zeitliche Fortpflanzungsgeschwindigkeit (v (t)) der Akustikwellen bestimmten,
- einen Befehlsprozessor (18) zur Erzeugung einer Befehlsinformation (I) auf der Grundlage der Pulsations- und Fortpflanzungsgeschwindigkeits-Messwerte,
- einen durch die Befehlsinformation (I) gesteuerten Stromgenerator (19) sowie
- ein Ensemble bzw. eine Gruppe von Wicklungen (20), die beidseits des (Akustik-) Dukts (V) angeordnet und mit dem Stromgenerator verbunden sind.

26. Elektrizitätskraftwerk mit eienm Elektrizitätsgenerator, **dadurch gekennzeichnet, dass** der Elektrizitätsgenerator ein Generator (21) gemäß einem der Ansprüche 22 bis 25 ist, wobei der thermoakustische Wandler ein Wandler nach Anspruch 21 ist, und dass es einen Parabolspiegel (22) zur Konzentration des Sonnenlichts umfasst, wobei die Luke bzw. das Instrumentfenster (3) der Wärmequelle dann im wesentlichen im Bereich der Brennzone des Konzentrations-Parabolspiegels angeordnet ist.

27. Elektrizitätskraftwerk nach Anspruch 26, welches eine Vorrichtung (23) zur Energiespeicherung umfasst.
